# EUROPEAN PATENT SPECIFICATION

(11) **EP 1 771 676 B1**
(45) Date of publication and mention of the grant of the patent: **14.08.2013**
(21) Application number: 05757189.5
(22) Date of filing: 07.07.2005
(51) Int. Cl.: F16L 3/123

(54) **HOSE CLAMP**
SCHLAUCHKLEMME
BRIDE DE SERRAGE POUR TUYAU SOUPLE

(30) Priority: 29.07.2004 DE 202004011936 U; 19.08.2004 DE 202004013043 U
(43) Date of publication of application: 11.04.2007
(73) Proprietor: Norma Sweden AB, 334 00 Anderstorp (SE)
(72) Inventor: REICHEL, Ralf, 34431 Marsberg-Meerhof (DE)
(74) Representative: Somlo, Tommy
(86) International application number: PCT/SE2005/001124
(87) International publication number: WO 2006/011838

(56) References cited:
- EP-A2- 1 186 817
- EP-A2- 1 186 817
- DE-U1- 20 105 870
- FR-A1- 2 476 246
- FR-A1- 2 476 246
- US-A- 3 169 004
- US-A- 3 169 004

## Description

The invention relates to a clamp, especially for retaining hoses, cables, pipes or the like, according to the preamble of claim 1.

Such a clamp is known, for example, from DE 201 05 870 U1. The clamp has a substantially annular fixing strip with two fixing flanges, each provided with a hole for passing through a tightening screw.

During assembly the flanges are pressed towards one another, the openings are aligned with respect to one another and the tightening screw is guided through the openings. The tightening screw is then tightened.

In order to facilitate assembly, especially to facilitate the mutual alignment of the flanges and the insertion of the tightening screw into the opening, the clamp is provided with a preassembly lock. The preassembly lock substantially consists of a hook formed on one of she flanges which has an undercut for hooking on the other fixing flange. By this means a connection can be made between the flanges before the actual final assembly. The hook can also be used to preassemble clamps on ain assembly, i.e., to supply an assembly with pre-assembled clamps.

Starting therefrom, it is the object of the present invention to provide a clamp with a preassembly lock which ensures that the pre-assembled clamp is reliably held and allows exact alignment of the fixing flanges and enveloping use.

This object is solved by a clamp having the features of claim 1.

From FR 2 476 246 is known a clamp for retaining hoses, cables, pipes or the like. The clamp comprises a snap connection having a pass though member of an elastic material for connection and disconnection of the pass through member from US 3 169 004 is known a fastener for securing wires, cables, conduits or other elongated work means to a work piece or panel. The fastener comprises a stud portion which is to be connected to one of a plurality of apertures.

The clamp, especially for retaining hoses, comprises an annular curved fixing strip having a first end and a second end, two flanges each connected to one end of the fixing strip, and openings in the flanges for guiding through a tensioning means. In addition, at least one of the flanges has connecting means for producing a riveted joint between the flanges.

A riveted joint is formed by a form-locking connection of the flanges by a plastically deformed, usually cylindrical, connecting element, the so-called rivet. Such a connection is not liable to damage. Any unintentional release of the riveted joint and possible loss of the preassembled clamps is virtually eliminated. A secure connection is thus achieved between the two fixing flanges. The riveted joint serves among other things as a preassembly lock when assemblies are supplied fitted with preassembled clamps. In this case, the flanges are reliably connected to one another by the riveted joint before the tensioning means, usually a tightening screw, is tightened during the final assembly in order to especially fix a hose or a pipe section. The preassembly of the clamps facilitates the guiding of the tightening screw through the openings of the flanges.

The connecting means preferably comprise at least one deformable pass-through member arranged on one of the flanges. The pass-through member forms a substantially cylindrical connecting element. Naturally, the pass-through member can be interrupted at one or a plurality of points or it can consist of a plurality of sections.

The pass-through member is especially constructed as plastically deformable. In this way, it should be possible to achieve a secure connection and simple preassembly. The material and thickness of the pass-through member are suitably selected to meet the requirements for a riveted joint.

The pass-through member is preferably arranged in a ring shape on one of the flanges so that the pass-through member can be guided through the opening in the other flange during preassembly. This ensures an exact adjustment of the flanges, especially an exact mutual alignment of the openings.

The pass-through member can be arranged in the area of the opening on one of the flanges. For example, the pass-through member can be provided at the edge of the opening of the flanges and thus additionally bring about strengthening against deformation when the tightening screw is tightened during the final assembly.

The pass-through member especially extends from one of the flanges through the opening of the other flange.

The pass-through member preferably extends substantially perpendicularly from one of the flanges.

The free end of the pass-through member is especially deformed to produce a riveted joint between the flanges. The flanges are thus securely held on one another in the preassembled state.

The free end of the pass-through member can be outwardly deformed and lies on the other flange.

In the area of the opening of at least one of the flanges, the clamp preferably has a profiling for stiffening the flange. The profiling is used to stabilise the flange or flanges. The profiling can have an embossing in the direction of the head of the tightening screw used in the final assembly. The profiling can also serve to brace the flanges with respect to one another to prevent any loosening of the tightening screw guided through the openings before assembly.

The profiling especially comprises a stiffening corrugation which surrounds the opening in a ring shape.

Further exemplary embodiments, features and advantages of the invention are obtained from the following description of a special exemplary embodiment. In the figures:

Fig. 1 is a side view of an opened clamp as delivered;

Fig. 2 is a side view of a preassembled clamp;

Fig. 3a is an enlarged section from Fig., 2; and

Fig. 3b shows the embodiment from Fig. 3a with screw,

Fig. 4 is a perspective view of the preassembled clamp,

Fig. 5 is a further exemplary embodiment of the clamp according to the invention,

Fig. 6 is a detailed view of the exemplary embodiment from Fig. 5, and

Fig. 7 shows the exemplary embodiment from Fig. 5 with screw.

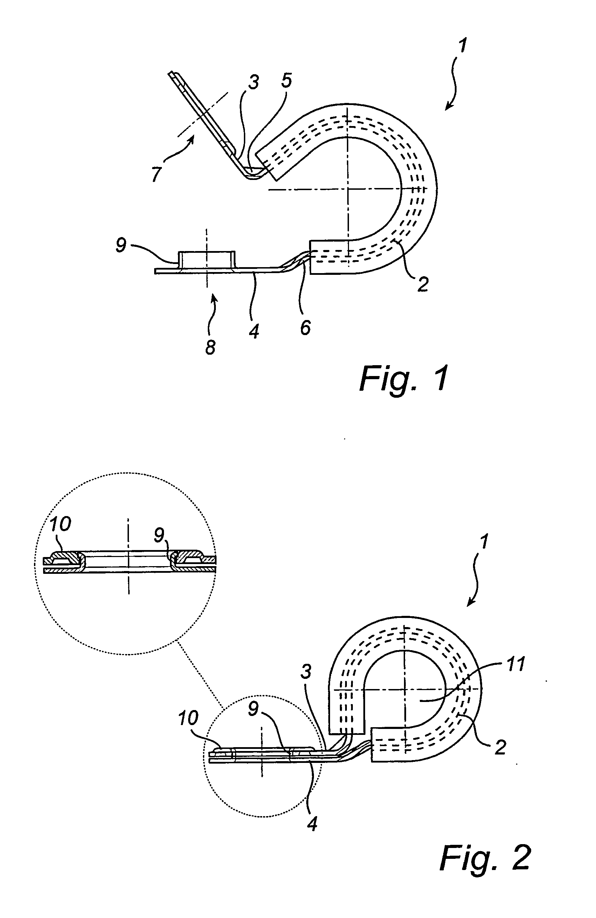

Fig. 1 shows an opened clamp 1 according to the invention, which has not yet been preassembled, as it is delivered to the preassembly site.

The clamp 1 has an annular curved fixing strip 2 having fixing flanges 3 and 4 connected to its two ends. The first fixing flange 3 extends substantially at right angles from the first end of the fixing strip 2, the second fixing flange 4 is connected to the second end of the fixing strip 2 via a step.

The fixing flanges 3 and 4 are not yet joined together when delivered so that the clamp 1 can be guided around hoses, cables, pipes or the like to be fixed or around hose ends to be joined in order to enclose these elements. Stiffening corrugations 5 and 6 are arranged at the transitions between the fixing strip 2 and the flanges 3 and 4 in order to prevent any deformation of the bend or the step. In this way it is ensured that when the clamp is closed, the flanges rest parallel on one another without the assembler exerting any force.

Openings 7 and 8 are provided in the flanges 3 and 4 through which a tightening screw can be guided during final assembly. If possible, the openings 7 and 8 should come to lie congruently above one another before final assembly so that the tightening screw can be guided through the openings 7 and 8 without any problems.

A pass-through member 9 extends from the lower flange 4 substantially perpendicularly in the direction of the upper flange 3. The pass-through member 9 is arranged at the edge of the opening 8 and encloses the region through which the tightening screw is guided during the final assembly. The pass-through member 9 is constructed so that it is relatively easily plastically deformable for the preassembly to make a riveted joint between the flanges 3 and 4.

For simple assembly it can also be provided that the pass-through member is constructed as conically tapering upwards. A different measure for easier assembly can involve applying a chamfer to the free outer edge of the pass-through member.

The opening 7 in the flange 3 shown above is surrounded by an annular stiffening corrugation 10 to give the flange 3 additional stiffness and prevent any deformation of the flange 3, especially when tightening the tightening screw during final assembly. Similarly, a stiffening corrugation (not shown) can be incorporated in the flange 4 shown below, in addition to the pass-through member 9.

Fig. 2 shows the clamp 1 in the preassembled state. The fixing strip 2 comprises a tightening cross-section 11 through which a hose to be fixed (not shown) is guided for example. The flanges 3 and 4 lie parallel on one another. The pass-through member 9 is guided through the opening 7 of the upper flange 3 during preassembly and is then outwardly plastically deformed.

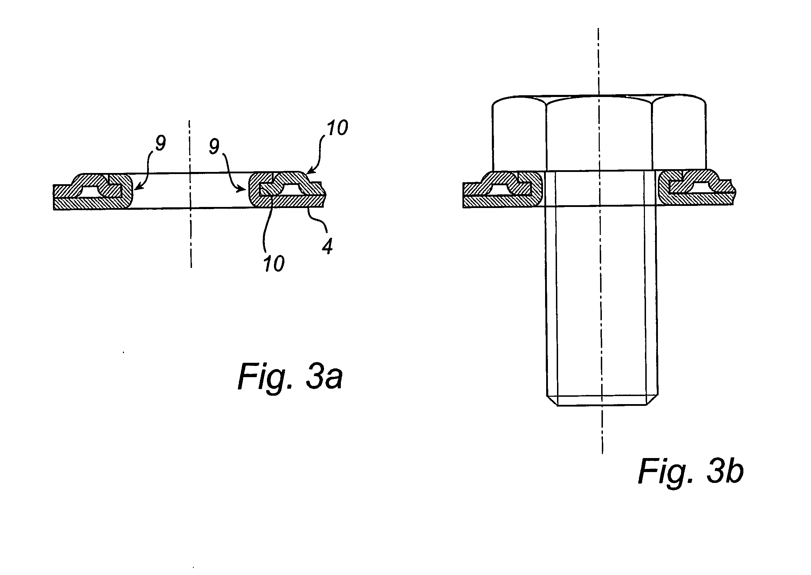

As can be seen particularly clearly from Fig. 3a, the outwardly deformed end of the pass-through member 9 lies on the upper flange 3 in the edge region of the opening 7. In this way, a secure connection is obtained between the two flanges 3 and 4. In addition, the openings 7 and 8 are optimally aligned with respect to one another by guiding the annular pass-through member through the opening 7. The annular pass-through member 9 can optionally be interrupted at one or a plurality of points and/or in the area of its free end. As a result of the secure fixing, clamps can be delivered preassembled on assemblies. Any loosening of the riveted joint and possible loss of the clamps preassembled on an assembly resulting therefrom is virtually eliminated.

The upper flange 3 is profiled in the area on which the deformed end of the pass-through member 9 lies such that a recess 12 is formed between the edge region of the opening 7 and the stiffening corrugation 10, which receives the deformed end of the pass-through member 9.

In Fig. 3b the flange 4 of the clamp shown in Fig. 3a is shown with a screw guided through the opening 8. The screw head lies on the corrugation 10 and on the riveted edge of the pass-through member 9.

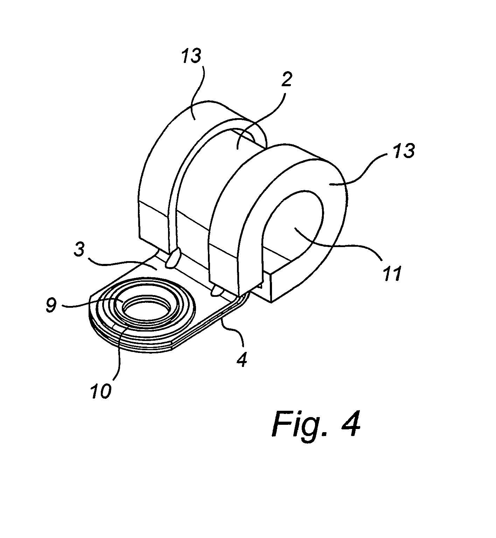

Fig. 4 shows the preassembled clamp 1 in a perspective view. The flanges 3 and 4 are securely joined together by a riveted joint formed by the plastically outwardly deformed ends of the pass-through member 9.

In the exemplary embodiment shown the fixing strip 2 which encloses the tightening cross-section 11 is provided with an elastomer sheath 13 to prevent the holder causing any damage to the hose to be fixed. A central slit on the outside makes it easy to pull the sheath 13 onto the fixing strip 2. Such a sheath can optionally be dispensed with for use on pipes. Especially in the case of pipes for high-temperature media, adaptation is required - either the sheath is made of a temperature-resistant material in this case or the sheath is not used.

During the final assembly a tightening screw is guided through the opening defined by the pass-through member 9 and tightened to fix the hose running through the tightening cross-section 11. The head of the tightening screw can rest on the flange 3.

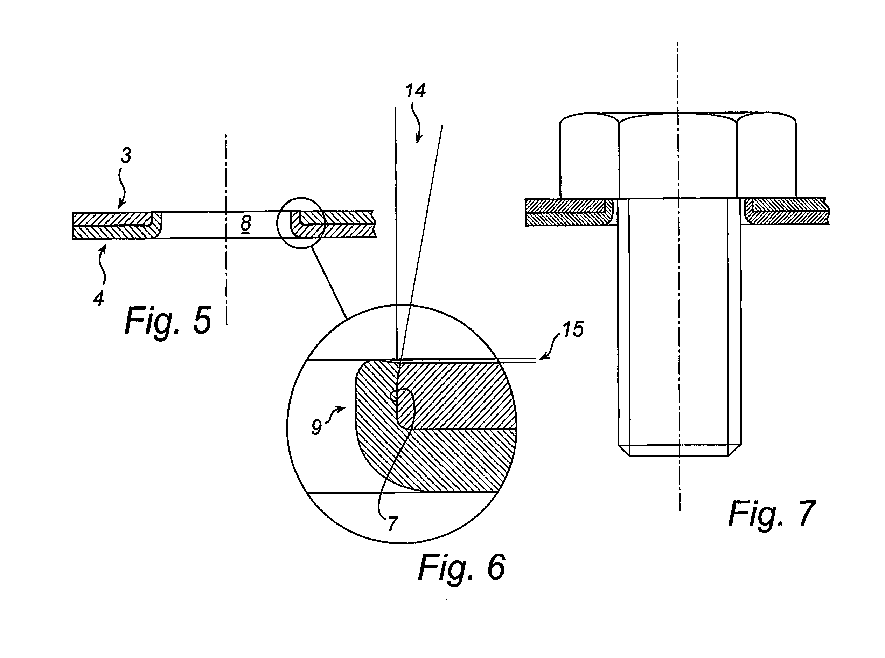

Figures 5 to 7 show another exemplary embodiment of the invention. In this exemplary embodiment the pass-through member 9 is only slightly higher than the material thickness of the flange 3. In this case, the height of the pass-through member can be selected before the riveting process so that this is between 0.3 and 0.8 mm depending on the material thickness and/or the type of material. In any case it is important that the preassembly riveting is sufficiently stable and secure so that it does not loosen prematurely, i.e., sufficient material must be provided so that during riveting at least a force-locking connection can be formed between the pass-through member and the wall of the opening 7. If necessary, sufficient material can be provided so that a deformation of the wall of the opening 7 in the fashion of an undercut 14 is obtained into which the material of the pass-through member enters.

In a further embodiment it can be provided that the free end of the pass-through member 9 is made to project upwards above the flange 3 with a slight projection 15 after riveting.

During the final assembly of the clamp the head of a fixing screw comes to rest on the projection and can release the pass-through member from the riveting. This makes it possible to simply release and remove the clamp for later dismantling, e.g. for repair.

In this embodiment the force for riveting the pass-through member can generally be substantially reduced.

### REFERENCE LIST

- 1: Clamp
- 2: Fixing strip
- 3: Fixing flange
- 4: Fixing flange
- 5: Stiffening corrugation
- 6: Stiffening corrugation
- 7: Opening
- 8: Opening
- 9: Pass-through member
- 10: Annular stiffening corrugation
- 12: Recess
- 13: Sheath
- 14: Oblique undercut
- 15: Projection

## Claims

1. A clamp (1), especially for retaining hoses, pipes, cables or the like, comprising an annular curved fixing strip (2) having a first end and a second end; two flanges (3, 4) each connected to a respective end of the fixing strip (2); and openings (7, 8) in the flanges (3, 4) for guiding through a tensioning means (7), **characterised in that**
the material in at least one of the flanges (4) constitutes portions for producing a riveted joint between the flanges (3, 4), wherein the portions comprise at least one deformable pass-through member (9) arranged on one of the flanges (4) and that the pass-through member (9) is constructed as plastically deformable, such that when the riveted joint has been formed, the pass-through member has been plastically deformed.

2. The clamp (1) according to claim 1, wherein the pass-through member (9) is arranged in a ring shape on one of the flanges (4) so that the pass-through member can be guided through the opening (7) in the other flange (3) during preassembly.

3. The clamp (1) according to any one of the preceding claims 1 to 2, wherein the pass-through member (9) is arranged in the area of the opening (8) on one of the flanges (4).

4. The clamp (1) according to any one of the preceding claims, wherein the pass-through member (9) extends from one of the flanges (4) through the opening (7) of the other flange (3).

5. The clamp (1) according to any one of the preceding claims, wherein the pass-through member (9) extends substantially perpendicularly from one of the flanges (4).

6. The clamp (1) according to any one of the preceding claims, wherein the free end of the pass-through member (9) is deformed to produce a riveted joint between the flanges (3, 4).

7. The clamp (1) according to any one of the preceding claims, wherein the free end of the pass-through member (9) is provided with a chamfer.

8. The clamp. (1) according to any one of the preceding claims 1 to 5, wherein the pass-through member (9) is constructed as tapering towards its free end.

9. The clamp (1) according to any one of the preceding claims 1 to 6, wherein the free end of the pass-through member (9) is deformed towards the outside and lies on the other flange (3).

10. The clamp (1) according to any one of the preceding claims, wherein in the area of the opening (7) of at least one of the flanges (3), the clamp (1) has a profiling for stiffening the flange (3).

11. The clamp (1) according to claim 10, wherein the profiling comprises a stiffening corrugation (10) which surrounds the opening (7) in a ring shape.

12. The clamp (1) according to any one of claims 1 to 5, wherein the pass-through member (9) is only slightly higher than the material thickness of the flange (3).

13. The clamp (1) according to claim 12, wherein after riveting the free end of the pass-through member (9) projects upwards over the flange (3) with a slight projection (15).

14. The clamp (1) according to claim 12 or 13,
wherein the free end of the pass-through member (9) rests in the opening (7) of the flanges (3) in a force-locking fashion.

15. The clamp (1) according to any one of the preceding claims 12 to 13, wherein the flange (3) on the side of the screw head has an undercut (14) at its opening (7) at least after the riveting process, into which the free end of the pass-through member (9) is outwardly deformed.

16. The clamp (1) according to any one of the preceding claims 12 to 15, wherein the pass-through member (9) rests on the head of a fixing screw with a slight projection (15) and can be detached thereby from the riveting.

## Patentansprüche

1. Schelle (1), insbesondere zur Halterung von Schläuchen, Rohren, Kabeln oder ähnliches, umfassend ein ringförmigen gebogenes Befestigungsband (2) mit eine ersten Ende und einem zweiten Ende; zwei Flansche (3, 4), die mit jeweils einem Ende des Befestigungsbandes (2) verbunden sind; und Öffnungen (7, 8) in den Flanschen (3, 4) zur Durchführung eines Spannmittels (7), **dadurch gekennzeichnet, dass** das wenigstens einer der Flansche (4) Verbindungsmittel zur Herstellung einer Nietverbindung zwischen den Flanschen (3, 4) aufweist, wobei die Verbindungsmittel wenigstens einen an einem der Flansche (4) angeordneten verformbaren Durchzug (9) umfassen und der Durchzug (9) plastisch verformbar ausgebildet ist, so dass wenn der Nietverbindung ausgebildet ist, der Durchzug plastisch verformt worden ist.

2. Schelle (1) nach Anspruch 1, **dadurch gekennzeichnet, dass** der Durchzug (9) ringförmig an einem der Flansche (4) so angeordnet ist, dass der Durchzug (9) durch die Öffnung (7) im anderen Flansch (3) geführt werden kann.

3. Schelle (1) nach einem der Ansprüche 1 oder 2, **dadurch gekennzeichnet, dass** der Durchzug (9) im Bereich der Öffnung (8) an einem der Flansche (4) angeordnet ist.

4. Schelle (1) nach einem der vorhergehenden Ansprüche, **dadurch gekennzeichnet, dass** sich der Durchzug (9) von einem der Flansche (4) durch die Öffnung (7) des anderen Flansches (3) erstreckt.

5. Schelle (1) nach einem der vorhergehenden Ansprüche, **dadurch gekennzeichnet, dass** sich der Durchzug (9) im Wesentlichen senkrecht von einem der Flansche (4) erstreckt.

6. Schelle (1) nach einem der vorhergehenden Ansprüche, **dadurch gekennzeichnet, dass** das freie Ende des Durchzuges (9)deformiert ist, um eine Nietverbindung zwischen den Flanschen (3, 4) herzustellen.

7. Schelle (1) nach einem der vorhergehenden Ansprüche, **dadurch gekennzeichnet, dass** das freie Ende des Durchzuges (9) mit einer Fase versehen ist.

8. Schelle (1) nach einem der vorhergehenden Ansprüche, **dadurch gekennzeichnet, dass** der Durchzug (9) sich zu seinem freien Ende hin verjüngend ausgebildet ist.

9. Schelle (1) nach einem der vorhergehenden Ansprüche 1 bis 6, **dadurch gekennzeichnet, dass** das freie Ende des Durchzugs (9) nach außen hin deformiert ist und auf dem anderen Flansch (3) aufliegt.

10. Schelle (1) nach einem der vorhergehenden Ansprüche, **dadurch gekennzeichnet, dass** die Schelle (1) im Bereich der Öffnung (7) wenigstens eines der Flansche (3) eine Profilierung zur Versteifung des Flansches (3) aufweist.

11. Schelle (1) nach Anspruch 10, **dadurch gekennzeichnet, dass** die Profilierung eine Versteifungssicke (10) umfasst, welche die Öffnung (7) ringförmig umgibt.

12. Schelle (1) nach einem der vorhergehenden Ansprüche 1 bis 5, **dadurch gekennzeichnet, dass** der Durchzug (9) nur geringfügig höher ist als der Materialdicke des Flansches (3).

13. Schelle (1) nach Anspruch 12, **dadurch gekennzeichnet, dass** das freie Ende des Durchzuges (9) nach dem Nieten mit einem geringfügigen Überstand (15) nach oben über dem Flansch (3) vorsteht.

14. Schelle (1) nach Ansprüchen 12 oder 13, **dadurch gekennzeichnet, dass** das freie Ende des Durchzuges (9) in der Öffnung (7) des Flansches (3) kraftschlüssig anliegt.

15. Schelle (1) nach einem der vorhergehenden Ansprüche 12 oder 13, **dadurch gekennzeichnet, dass** der schraubenkopfseitige Flansch (3) an seiner Öffnung (7) eine Hinterschneidung (14) zumindest nach dem Nietvorgang aufweist, in die das freie Ende des Durchzuges (9) nach außen hin deformiert ist.

16. Schelle (1) nach einem der vorhergehenden Ansprüche 12 bis 15, **dadurch gekennzeichnet, dass** der Durchzug (9) mit dem geringfügigen Überstand (15) am Kopf einer Befestigungsschraube anliegt und aus der Vernietung lösbar ist.

## Revendications

1. Collier de serrage (1), destiné en particulier à maintenir des tuyaux souples, des conduites, des câbles ou autres, comprenant une bande de fixation courbe annulaire (2) comportant une première extrémité et une seconde extrémité, deux brides (3, 4) reliées chacune à une extrémité respective de la bande de fixation (2), et des ouvertures (7, 8) dans les brides (3, 4) pour un guidage à travers un moyen de tension (7), **caractérisé en ce que** le matériau dans au moins une des brides (4) constitue des parties destinées à produire une rivure entre les brides (3, 4), où les parties comprennent au moins un élément traversant déformable (9) disposé sur une des brides (4) et l'élément traversant (9) est conçu comme étant plastiquement déformable de telle sorte que quand la rivure a été formée, l'élément traversant déformable a été déformé plastiquement.

2. Collier de serrage (1) selon la revendication 1, dans lequel l'élément traversant (9) est agencé suivant une forme annulaire sur une des brides (4) de sorte que l'élément traversant peut être guidé à travers l'ouverture (7) dans l'autre bride (3) au cours d'un préassemblage.

3. Collier de serrage (1) selon l'une quelconque des revendications précédentes 1à 2, dans lequel l'élément traversant (9) est agencé dans la zone de l'ouverture (8) sur une des brides (4).

4. Collier de serrage (1) selon l'une quelconque des revendications précédentes, dans lequel l'élément traversant (9) s'étend depuis une des brides (4) à travers l'ouverture (7) de l'autre bride (3).

5. Collier de serrage (1) selon l'une quelconque des revendications précédentes, dans lequel l'élément traversant (9) s'étend sensiblement perpendiculairement à l'une des brides (4).

6. Collier de serrage (1) selon l'une quelconque des revendications précédentes, dans lequel l'extrémité libre de l'élément traversant (9) est déformée pour produire une rivure entre les brides (3, 4).

7. Collier de serrage (1) selon l'une quelconque des revendications précédentes, dans lequel l'extrémité libre de l'élément traversant (9) est dotée d'un chanfrein.

8. Collier de serrage (1) selon l'une quelconque des revendications précédentes 1 à 5, dans lequel l'élément traversant (9) est constitué comme s'effilant vers son extrémité libre.

9. Collier de serrage (1) selon l'une quelconque des revendications précédentes 1à 6, dans lequel l'extrémité libre de l'élément traversant (9) est déformée vers l'extérieur et se situe sur l'autre bride (3).

10. Collier de serrage (1) selon l'une quelconque des revendications précédentes, dans lequel dans la zone de l'ouverture (7) d'au moins une des brides (3), le collier de serrage (1) présente un profil destiné à renforcer la bride (3).

11. Collier de serrage (1) selon la revendication 10, lequel le profil comprend un plissement de renfort (10) entoure l'ouverture (7) suivant une forme annulaire.

12. Collier de serrage (1) selon l'une quelconque des revendications 1 à 5, dans lequel l'élément traversant (9) est seulement légèrement plus élevé que l'épaisseur du matériau de la bride (3).

13. Collier de serrage (1) selon la revendication 12, dans lequel après un rivetage, l'extrémité libre de l'élément traversant (9) dépasse vers le haut au-des sus de la bride (3) en présentant une légère protubérance (15).

14. Collier de serrage (1) selon la revendication 12 au 13, dans lequel l'extrémité libre de l'élément traversant (9) repose dans l'ouverture (7) des brides (3) d'une manière par verrouillage de force.

15. Collier de serrage (1) selon l'une quelconque des revendications précédentes 12 à 13, dans lequel la bride (3) du côte de la tête de vis présente un évidement (14) au niveau de son ouverture (7) au mains après le procédé de rivetage, dans lequel l'extrémité libre de l'élément traversant (9) est déformée vers l'extérieur.

16. Collier de serrage (1) selon l'une quelconque des revendications précédentes 12 à 15, dans lequel l'élément traversant (9) repose sur la tête d'une vis de fixation avec une légère protubérance (15) et peut être séparé de cette manière du rivetage.
